# EUROPEAN PATENT APPLICATION

(11) **EP 4 203 132 A1**
(43) Date of publication of application: **28.06.2023**
(21) Application number: 21858664.2
(22) Date of filing: 23.08.2021
(51) Int. Cl.: H01M 10/0565, H01M 10/052, H01M 10/054

(54) **COMPOSITE POLYMER SOLID ELECTROLYTE AND PREPARATION METHOD THEREFOR**

(30) Priority: 21.08.2020 KR 20200105118; 20.08.2021 KR 20210110517
(71) Applicant: ENERGY11 CO., LTD., Jeollabuk-do 55315 (KR)
(72) Inventor: HA, Young Kyun, Dalseong-gun Daegu 42995 (KR); CHOO, Kyo Chan, Seoul 07016 (KR); LIM, Du Hyun, Seoul 04951 (KR); OH, Byeong Hun, Iksan-si Jeollabuk-do 54561 (KR); IM, Hye Min, Daejeon 34219 (KR)
(74) Representative: Stöckeler, Ferdinand
(86) International application number: PCT/KR2021/011202
(87) International publication number: WO 2022/039577

(57) **Abstract**

The disclosure relates to a composite polymer solid electrolyte including polyethylene oxide (PEO); a ceramic powder; a liquid electrolyte that contains a lithium salt or a sodium salt; and an inorganic fiber scaffold.

According to the disclosure, there are provided a composite polymer solid electrolyte, which is improved in productivity by thermally compressing a composite solid electrolyte and an inorganic fiber to increase tensing strength, and a method of preparing the same.

## Description

### [TECHNICAL FIELD]

The disclosure relates to a composite polymer solid electrolyte and a method of preparing the same, and more particularly to a composite polymer solid electrolyte and a method of preparing the same, in which a polyethylene oxide composite solid electrolyte using an inorganic fiber scaffold can secure tensile strength without interfering with the ionic conductivity and charge/discharge capacity of a polymer electrolyte.

### [BACKGROUND ART]

With the increase in use of renewable energy to reduce environmental pollution caused by use of fossil fuels, demand for an energy storage system is explosively increasing, and thus safety issues such as frequent occurrence of fires and explosions are emerging. A separator is one of the three core materials of a secondary battery, and causes the most problems among fire-producing materials. Accordingly, many studies have recently been conducted on all-solid-state batteries using a solid electrolyte that is safe from the fire. Although ceramic type solid electrolytes such as oxide-based solid electrolytes, sulfide-based solid electrolytes, and phosphoric acid-based solid electrolytes, which are mostly used as the solid electrolytes, are being extensively researched, they are difficult to commercialize due to low productivity and low ionic conductivity. When such a solid electrolyte is actually used in manufacturing a battery, the battery is not only difficult to use at room temperature but also difficult to handle during a process.

To solve this problem, there has been an attempt to use a quasi-solid electrolyte prepared by mixing a polymer (PEO, PVdF, PVdF-co-HFP, etc.) and a ceramic type solid electrolyte powder with a liquid electrolyte in an appropriate ratio. Such a quasi-solid electrolyte has an advantage of having high ionic conductivity at room temperature and exhibiting performance similar to that of the liquid electrolyte, but has a disadvantage of low utilization due to low tensile strength which is the characteristic of the polymer electrolyte. Besides, many attempts have been made to use a nonwoven fabric electrolyte prepared by an electrospinning method, but there is a problem that such a nonwoven fabric electrolyte is deformed at low temperature.

### [DISCLOSURE]

### [TECHNICAL PROBLEM]

The disclosure is conceived to solve the foregoing problems, and an aspect of the disclosure is to provide a composite polymer solid electrolyte improved in productivity by thermally compressing a composite solid electrolyte and an inorganic fiber to increase tensing strength and high-temperature stability.

Another aspect of the disclosure is to provide a method of preparing a composite polymer solid electrolyte by thermally compressing a composite solid electrolyte and an inorganic fiber.

### [TECHNICAL SOLUTION]

According to an aspect of the disclosure, there is provided a composite polymer solid electrolyte including: polyethylene oxide (PEO); a ceramic powder; a liquid electrolyte that contains a lithium salt or a sodium salt; and an inorganic fiber scaffold.

Further, the lithium salt may include one or more selected from the group consisting of LiPF₆, LiTFSI, LiClO₄, LiBF₄, LiAsF₆, LiCF₃SO₃, Li(CF₃SO₂)₂N, LiBph₄, and Li(CF₃SO₂)₃C.

Further, the sodium salt may include one or more selected from the group consisting of NaPF₃, NaAsF₆, NaSbF₆, NaPF₄, NaCF₃SO₃, NaClO₄, NaN(SO₂CF₃)₂, and NaFSI.

Further, the ceramic powder may include one or more selected from the group consisting of LATP(Li₁₊ₓAlₓTi₂₋ₓ(PO₄)₃), LAGP(Li_{1.5}Al_{0.5}Ge_{1.5}(PO₄)₃), Na₃PS₄, Na₃SbS₄, NASICON, and β-Al₂O₃.

Further, the liquid electrolyte may include one or more selected from the group consisting of carbonate-based solvents including ethyl carbonate (EC), propylene carbonate (PC), and diethyl carbonate (DEC); phosphoric acid-based solvents including triethyl phosphate (TEP), and trimethyl phosphate (TMP); and ether-based solvents including triethylene glycol dimethyl ether (TEGDME), polyethyleneglycol dimethyl ether (PEGDME), and diethyleneglycol dimethyl ether (DEGDME).

Further, the inorganic fiber scaffold may include a glass fiber.

Further, the glass fiber may have a thickness of 10 to 30 *µ*m, and a density of 20 to 30 g/L.

An aspect of the disclosure, there is provided a method of preparing a composite polymer solid electrolyte, including: mixing polyethylene oxide; and a liquid electrolyte that contains a lithium salt or a sodium salt; preparing a polymer separator through a high-temperature roll press after mixing a ceramic power into the liquid mixture; and bonding the polymer separator with an inorganic fiber scaffold through the high-temperature roll press.

Further, the high-temperature roll press may be performed at a temperature ranging from 60 to 150°C.

Further, the composite polymer solid electrolyte may be prepared to have a thickness of 50 to 100 *µ*m.

### [DESCRIPTION OF DRAWINGS]

FIG. 1 is a view showing lithium-ionic conductivity of a composite polymer solid electrolyte according to an embodiment of the disclosure.
FIG. 2 is a view showing a lithium half-cell charge/discharge test using a LiFePo4 (LFP) cathode at 21°C of a composite polymer solid electrolyte separator according to an embodiment of the disclosure.
FIG. 3 is a view showing a lithium half-cell charge/discharge test using an LFP cathode at 100°C of a composite polymer solid electrolyte separator according to an embodiment of the disclosure.
FIG. 4 is a view showing the tensile strength of a composite polymer solid electrolyte according to an embodiment of the disclosure.
FIG. 5 is a view showing sodium-ionic conductivity of a composite polymer solid electrolyte according to an embodiment of the disclosure.
FIG. 6 is a view showing a linear sweep voltammetry (LSV) test of a composite polymer solid electrolyte separator according to an embodiment of the disclosure.
FIG. 7 is a view showing a sodium half-cell charge/discharge test using a nickel hexacyanoferrate (NFNC) at 21°C of a composite polymer solid electrolyte separator according to an embodiment of the disclosure.

### [BEST MODE]

The disclosure relates to a composite polymer solid electrolyte including polyethylene oxide (PEO); a ceramic powder; a liquid electrolyte that contains a lithium salt or a sodium salt; and an inorganic fiber scaffold.

Below, the disclosure will be described in detail with reference to the accompanying drawings.

One of disadvantageous properties that polyethylene oxide (PEO), a main component of the composite polymer solid electrolyte, has is that polyethylene oxide (PEO) is transformed into gel at a temperature of 60°C or higher and thus decreased in physical strength. To overcome this disadvantage, the composite polymer solid electrolyte is laminated with an inorganic fiber by thermal compression, thereby maintaining and improving the tensile strength and the physical strength even at high temperature.

According to an aspect of the disclosure, a lithium salt used in a lithium ion secondary battery may be selected among LiPF₆, LiTFSI, LiClO₄, LiBF₄, LiAsF₆, LiCF₃SO₃, Li(CF₃SO₂)₂N, LiBph₄, and Li(CF₃SO₂)₃C.

According to an aspect of the disclosure, a sodium salt used in a sodium secondary battery may be selected among NaPF₆, NaAsF₆, NaSbF₆, NaPF₄, NaClO₄, NaN(SO₂CF₃)₂, and NaCF₃SO₃.

According to the disclosure, the composite solid electrolyte is improved in the physical strength when prepared by mixing a ceramic powder and PEO, i.e., a polymer into a liquid electrolyte, thereby improving the productivity of the secondary battery.

Further, according to an aspect of the disclosure, a sulfide-based electrolyte powder or an oxide-based electrolyte powder may be used as the ceramic powder; LATP(Li₁₊ₓAlₓTi₂₋ₓ(PO₄)₃), LAGP(Li_{1.5}Al_{0.5}Ge_{1.5}(PO₄)₃), Na₃PS₄, Na₃SbS₄, etc. may be used as the sulfide-based electrolyte powder; and NASICON, β-Al₂O3, etc. may be used as the oxide-based electrolyte powder.

According to an aspect of the disclosure, the liquid electrolyte may be prepared by selecting a carbonate-based solvent including ethyl carbonate (EC), propylene carbonate (PC), diethyl carbonate (DEC), etc.; a phosphoric acid-based solvent including triethyl phosphate (TEP), trimethyl phosphate (TMP), etc.; and one or more ether-based solvents including triethylene glycol dimethyl ether (TEGDME), polyethyleneglycol dimethyl ether (PEGDME), diethyleneglycol dimethyl ether (DEGDME), etc.

The inorganic fiber scaffold used in an aspect of the disclosure may be a glass fiber. In particular, the glass fiber improves the tensile strength, increases the physical strength, prevents deformation even at a high temperature of 1000°C or higher, and has excellent chemical resistance to be stable even in electrochemical reactions occurring in electrodes, thereby overcoming the disadvantages of the polymer electrolyte. Further, the glass fiber has flame resistance and thus improves safety from fire and explosion.

According to an aspect of the disclosure, the glass fiber may have a thickness of 10 to 30 *µ*m, and a density of 20 to 30 g/L. The glass fiber having a thickness less than 10 *µ*m is not suitable because its tensile strength is weak, and the glass fiber having a thickness more than 30 *µ*m is also not suitable because it causes a quasi-solid electrolyte to be increased in total thickness and resistance. Further, the glass fiber having a density less than the foregoing range is not suitable because its physical strength is weak, and the glass fiber having a density more than the foregoing range is also not suitable because the solid electrolyte is not permeable, the ionic conductivity is lowered, and the resistance is increased.

An aspect of the disclosure relates to a method of preparing a composite polymer solid electrolyte, the method including the following steps of:
mixing polyethylene oxide; and a liquid electrolyte containing a lithium salt or sodium salt;
preparing a polymer separator through a high-temperature roll press after mixing a ceramic powder into the liquid mixture; and
bonding the polymer separator with an inorganic fiber scaffold through the high-temperature roll press.

According to an aspect of the disclosure, the high-temperature roll press may be performed at a temperature ranging from 60 to 150°C. At a temperature lower than 60°C, it is not suitable because PEO does not gel so that it cannot have the form of a film. At a temperature higher than 150°C, it is not suitable because phase transition occurs in the liquid electrolyte and PEO.

Further, the composite polymer solid electrolyte may be prepared to have a thickness of 50 to 100 *µ*m. The composite polymer solid electrolyte having a thickness less than 50 *µ*m is not suitable because its physical strength is weak and thus the lifespan of a secondary battery is shortened, and the composite polymer solid electrolyte having a thickness more than 100 *µ*m is also not suitable because the total volume of the battery increases despite of improved physical strength.

According to the disclosure, based on properties that PEO of the composite solid electrolyte changes into a gel at a temperature of 60°C or higher, the composite solid electrolyte is laminated with an inorganic fiber at the temperature of 60°C or higher, thereby increasing the tensile strength and the physical strength and thus extending the lifespan of the secondary battery. Further, the inorganic fiber is not deformed even at a temperature of 1000°C or higher, thereby increasing durability. By impregnating the liquid electrolyte solvent, a battery is made to exhibit relatively high ionic conductivity even at room temperature and have high capacity, thereby having high reliability of safety.

### [MODE FOR INVENTION]

Below, embodiments of the disclosure will be described in more detail. However, such embodiments are given for illustrative purposes only, and are not construed as limiting the scope of the disclosure.

Further, a lithium or sodium secondary battery will be described as an example of a secondary battery according to the disclosure, and other secondary batteries may be used in the same/similar way.

### [Embodiment]

### [Embodiment 1]

A solid electrolyte separator was prepared by mixing 40% by weight of polyethylene oxide with 50% by weight of a liquid electrolyte (TEP:PC:VC=90:9:1) containing LiTFSI and 10% by weight of a ceramic solid electrolyte LATP, and then undergoing a high-temperature roll press.

Then, a separator and a glass fiber(YUNIU Fiberglass, EC5.5-12*1*10) having a density of 25g/L and a thickness of 25 *µ*m were bonded to have a thickness of 50 to 80 *µ*m through a high-temperature roll press at a temperature of 100°C.

### [Embodiment 2]

A solid electrolyte separator was prepared by mixing 40% by weight of polyethylene oxide with 50% by weight of a liquid electrolyte (TEP:PC:VC=90:9:1) containing NaClO₄ and 10% by weight of a ceramic solid electrolyte β-Al₂O₃, and then undergoing a high-temperature roll press.

Then, a separator and a glass fiber(YUNIU Fiberglass, EC5.5-12*1*10) having a density of 25g/L and a thickness of 25 *µ*m were bonded up to a thickness of 70 to 100 *µ*m through a high-temperature roll press at a temperature of 100°C.

### [Experimental example]

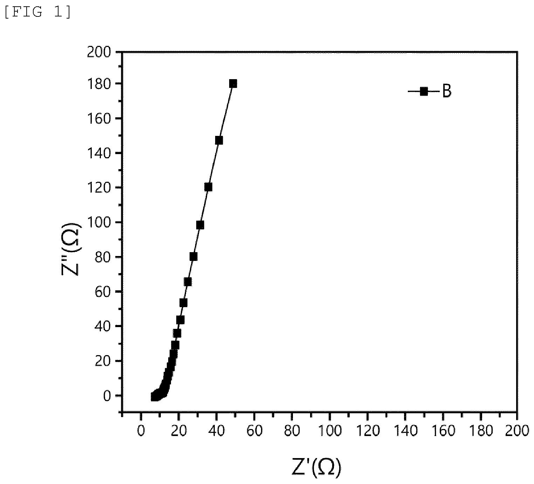

FIG. 1 is a view showing the ionic conductivity of a lithium ion-based composite polymer solid electrolyte according to the embodiment 1. Referring to FIG. 1, at a room temperature of 21°C, the composite polymer solid electrolyte had a thickness of 74 *µ*m, a diameter of 16 mm (2.0096 cm²), and a value of 4×10⁻⁴ S/cm or higher.

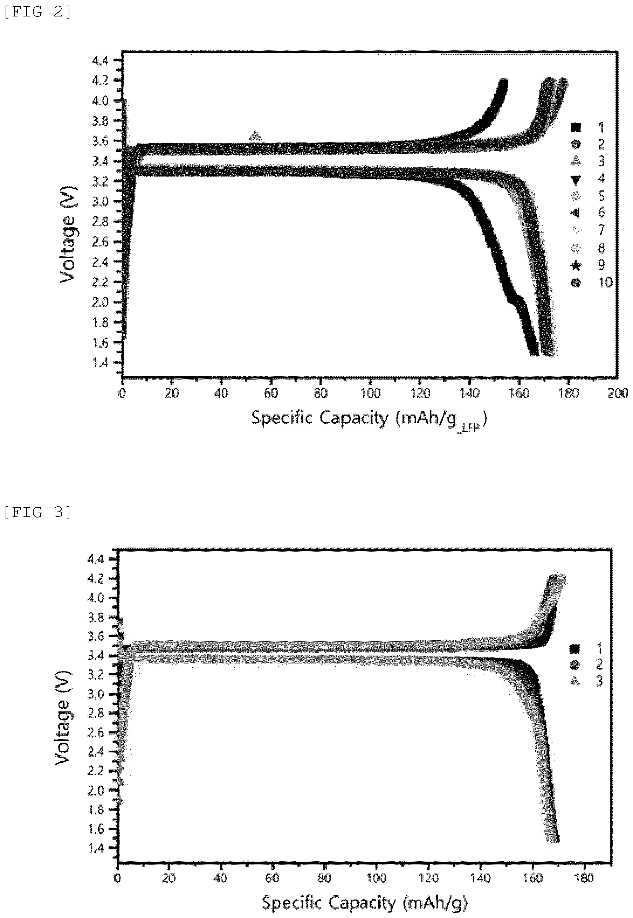

FIG. 2 shows a charge/discharge test for the composite polymer solid electrolyte according to the embodiment 1 at a room temperature of 21°C. FIG. 2 shows charging/discharging results at a charge/discharge current density of 0.1C in a cathode of LFP(LiFePO₄) and an anode of lithium metal, in which a difference in charging/discharging voltage is so small that the composite polymer solid electrolyte has low resistance and is usable at room temperature.
FIG. 3 shows a charge/discharge test for the composite polymer solid electrolyte according to the embodiment 1 at a temperature of 100°C. Referring to FIG. 3, a discharging capacity was as high as 170mAh/g, which is an approximate value of the theoretical capacity under the condition of 0.1C, and a difference between a charging average voltage and a discharging average voltage was lowered as compared with that at room temperature. This phenomenon was caused by improvement in ionic conductivity at high temperature, and excellent results were obtained even at high temperature.

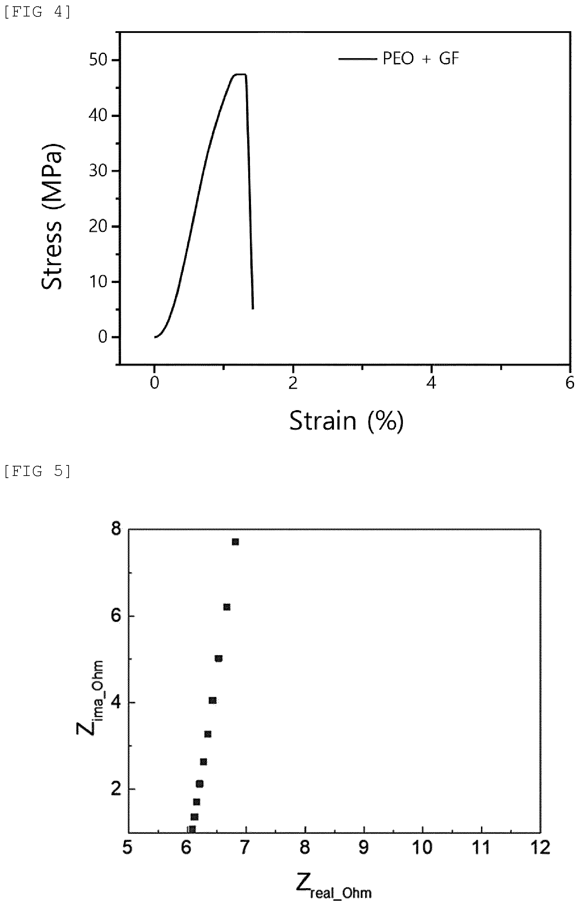

FIG. 4 is a view showing the tensile strength of a composite polymer solid electrolyte according to the embodiment 1. Referring to FIG. 4, the commonly used celgard^{ⓡ} 2400 has a tensile strength of 1.4MPa, but the solid electrolyte of this disclosure has a relatively high tensile strength of 45MPa. The celgard^{ⓡ} 2400 separator was stretched by about 60%, but the solid electrolyte according to this embodiment of the disclosure was stretched by about 2%, i.e., hardly stretched while exhibiting solid properties.
FIG. 5 is a view showing the ionic conductivity of a sodium ion-based composite polymer solid electrolyte according to the embodiment 2. Referring to FIG. 5, at a room temperature of 21°C, the composite polymer solid electrolyte had a thickness of 100 *µ*m, a diameter of 16 mm (2.0096 cm²), and a value of 3×10⁻⁴ S/cm or higher

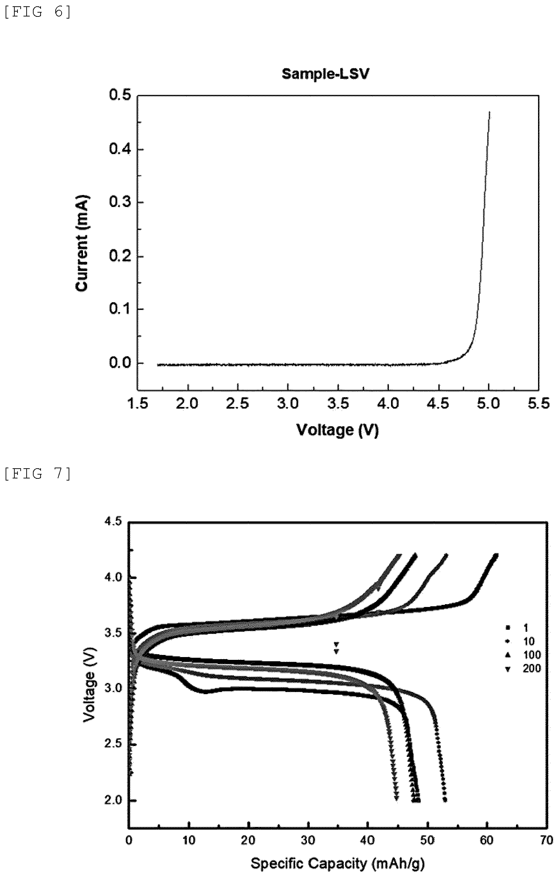

FIG. 6 shows a linear sweep voltammetry (LSV) test for of a sodium ion-based composite polymer solid electrolyte according to the embodiment 2. Referring to FIG. 6, when variation in current was measured while raising voltage constantly at a rate of 1 mV/S under the condition that the composite polymer solid electrolyte was inserted between sodium metals, the current rose rapidly at 4.6 V, which means that the composite polymer solid electrolyte has voltage safety for sodium up to 4.6 V. This voltage is higher than the charging voltage, i.e., 4.2 V of the sodium secondary battery, and therefore the composite polymer solid electrolyte has high safety for the sodium secondary battery.
FIG. 7 is a view showing a sodium half-cell charge/discharge test using a (Na₄Fe(CN)₆) cathode at 21°C of a sodium ion-based composite polymer solid electrolyte according to the embodiment 2. FIG. 7 shows charging/discharging results at a charge/discharge current density of 0.1C in a cathode of NFCN(Na₄Fe(CN)₆) and an anode of sodium metal, in which the composite polymer solid electrolyte has a discharge capacity of about 50mAh/g similar to that of when a liquid electrolyte is used. Despite of a half cell using sodium metal as the anode, it can be charged and discharged more than 200 times, i.e., have a long lifespan.

### [INDUSTRIAL APPLICABILITY]

According to the disclosure, there are provided a composite polymer solid electrolyte, which is improved in productivity by thermally compressing a composite solid electrolyte and an inorganic fiber to increase tensing strength and high-temperature stability, and a method of preparing the same.

## Claims

1. A composite polymer solid electrolyte comprising:
polyethylene oxide (PEO);
a ceramic powder;
a liquid electrolyte that contains a lithium salt or a sodium salt; and
an inorganic fiber scaffold.

2. The composite polymer solid electrolyte of claim 1, wherein the lithium salt comprises one or more selected from the group consisting of LiPF₆, LiTFSI, LiClO₄, LiBF₄, LiAsF₆, LiCF₃SO₃, Li(CF₃SO₂)₂N, LiBph₄, and Li(CF₃SO₂)₃C.

3. The composite polymer solid electrolyte of claim 1, wherein the sodium salt comprises one or more selected from the group consisting of NaPF₃, NaAsF₆, NaSbF₆, NaPF₄, NaCF₃SO₃, NaClO₄, NaN(SO₂CF₃)₂, and NaFSI.

4. The composite polymer solid electrolyte of claim 1, wherein the ceramic powder comprises one or more selected from the group consisting of LATP(Li₁₊ₓAlₓTi₂₋ₓ(PO₄)₃), LAGP(Li_{1.5}Al_{0.5}Ge_{1.5}(PO₄)₃), Na₃PS₄, Na₃SbS₄, NASICON, and β-Al₂O₃.

5. The composite polymer solid electrolyte of claim 1, wherein the liquid electrolyte comprises one or more selected from the group consisting of carbonate-based solvents comprising ethyl carbonate (EC), propylene carbonate (PC), and diethyl carbonate (DEC); phosphoric acid-based solvents comprising triethyl phosphate (TEP), and trimethyl phosphate (TMP); and ether-based solvents comprising triethylene glycol dimethyl ether (TEGDME), polyethyleneglycol dimethyl ether (PEGDME), and diethyleneglycol dimethyl ether (DEGDME).

6. The composite polymer solid electrolyte of claim 1, wherein the inorganic fiber scaffold comprises a glass fiber.

7. The composite polymer solid electrolyte of claim 6, wherein the glass fiber has a thickness of 10 to 30 *µ*m, and a density of 20 to 30 g/L.

8. A method of preparing a composite polymer solid electrolyte, comprising:
mixing polyethylene oxide; and a liquid electrolyte that contains a lithium salt or a sodium salt;
preparing a polymer separator through a high-temperature roll press after mixing a ceramic power into the liquid mixture; and
bonding the polymer separator with an inorganic fiber scaffold through the high-temperature roll press.

9. The method of claim 8, wherein the high-temperature roll press is performed at a temperature ranging from 60 to 150°C.

10. The method of claim 8, wherein the composite polymer solid electrolyte is prepared to have a thickness of 50 to 100 *µ*m.
